# FASCICULE DE BREVET EUROPEEN

(11) **EP 3 792 619 B1**
(45) Date de publication et mention de la délivrance du brevet: **01.11.2023**
(21) Numéro de dépôt: 19196820.5
(22) Date de dépôt: 11.09.2019
(51) Int. Cl.: G01N 21/88, G01N 21/95

(54) **ENSEMBLE DE DÉTECTION DE DÉFAUTS SUR UNE CARROSSERIE D'UN VÉHICULE AUTOMOBILE**
EINHEIT ZUR ERFASSUNG VON FEHLERN AUF EINER KAROSSERIE EINES KRAFTFAHRZEUGS
ASSEMBLY FOR DETECTING FAULTS ON A BODY OF A MOTOR VEHICLE

(43) Date de publication de la demande: 17.03.2021
(73) Titulaire: Proov Station, 69001 Lyon (FR)
(72) Inventeur: TISSANDIER, Gabriel, 69001 Lyon (FR); BERNARD, Cédric, 69001 Lyon (FR); PERRET-MEYER, Alexandre, 69001 Lyon (FR)
(74) Mandataire: Fédit-Loriot

(56) Documents cités:
- EP-A1- 2 386 848
- EP-B1- 2 212 681
- FR-A1- 3 075 371
- US-A1- 2018 012 350
- US-B1- 6 392 754
- US-B1- 6 496 253

## Description

La présente invention se rapporte à un ensemble de détection de défauts sur la carrosserie d'un véhicule automobile, son soubassement et potentiellement les pneumatiques.

L'invention s'applique à différents usages dans le domaine de l'automobile.

D'une part l'invention s'applique à la détection de défauts sur une carrosserie en sortie de ligne de fabrication.

En effet, après la fabrication d'un véhicule automobile, il est bien connu de l'homme du métier qu'un contrôle qualité est opéré. Ce contrôle qualité vise notamment à s'assurer qu'aucun défaut ne soit apparent sur la carrosserie.

Un tel contrôle est habituellement opéré par des spécialistes de la qualité qui réalisent des vérifications visuelles, relativement fastidieuses et pouvant être peu fiables.

L'invention s'applique aussi au domaine de la restitution de véhicules après location, dans laquelle on souhaite permettre l'automatisation de l'établissement d'un document détaillé d'état des lieux.

L'invention s'applique plus généralement dans l'ensemble des métiers de l'automobile où la nécessité d'un contrôle de l'état cosmétique du véhicule subvient. Cela implique plus généralement tout transfert de responsabilité dans la vie d'un véhicule automobile

Par ailleurs, l'invention s'applique aussi au domaine de la détection automatique de dommages sur les carrosseries de véhicules automobiles, par exemple après un événement accidentel, tel qu'une collision ou une pluie de grêlons.

A cet effet on connaît notamment le document WO2006052684, *System for measuring points on a vehicle during damage repair,* qui décrit un système pour mesurer des points caractéristiques de la carrosserie en vue de sa réparation, par triangulation de moyens optiques mobiles, et par comparaison des valeurs obtenues avec des valeurs de référence prédéterminées.

Une telle solution ne permet toutefois pas de détecter tous les types de défauts de surface d'un véhicule automobile, et nécessite que des données de références soient acquises pour tous les véhicules analysés.

On connait par ailleurs le document FR 3 075 371 A1 qui divulgue un système d'aide à la détection d'un défaut de surface, et les documents EP 2 386 848 A1 et US 2011/285987 A1 qui concernent tous deux une installation de contrôle de la qualité d'une surface d'un objet par déflectométrie à décalage de phase.

De plus, la notion de faux positif dans la détection n'est pas incluse dans cette typologie de détection. Le système décrit permet de faire la différence entre un dommage et un élément extérieur sur la carrosserie pouvant être interprétée comme un dommage.

Aussi il existe le besoin d'une solution plus fiable et pouvant s'adapter à tous types de véhicules automobiles peu importe leurs typologies ou la condition d'inspection.

On propose un ensemble de détection de défauts sur l'ensemble des aspect extérieur et cosmétique (carrosserie, soubassement, bris de glace, pneumatique) sur une carrosserie d'un véhicule automobile comprenant un portique, de section droite en U inversé, conformé pour permettre le passage dudit véhicule automobile, selon une direction longitudinale, depuis l'arrière du portique vers l'avant du portique ; ledit portique comprenant une surface interne s'étendant transversalement entre deux extrémités libres latérales et comprenant une source lumineuse adaptée pour éclairer de manière sensiblement uniforme la carrosserie du véhicule automobile lors de son passage, ledit portique comprenant au moins une bande opaque s'étendant transversalement sur toute la longueur de la surface interne ; ledit ensemble comprenant une pluralité de caméras installées à distance du portique, selon au moins un direction longitudinale, de sorte à pouvoir capter des images de la carrosserie du véhicule automobile lors de son passage sous le portique, et un organe de détection apte à recevoir lesdites images captées par ladite pluralité de caméras et à détecter, en fonction desdites images, des défauts de la carrosserie, d'une part par analyse de la réflexion de ladite bande opaque sur la carrosserie, et d'autre part par reconnaissance directe dans lesdites images de
défaut mise en valeur par l'observation du reflet de la source lumineuse sur la carrosserie.

Ainsi, on peut obtenir une structure relativement simple et permettant de détecter des défauts de carrosserie, à la fois par analyse déflectométrique et par analyse directes des images de la carrosserie.

Avantageusement et de manière non limitative, la surface interne présente une forme arquée selon la direction transversale. Ainsi, on peut assurer un éclairage relativement uniforme, par l'absence d'angle vif sur la surface interne.

Avantageusement et de manière non limitative, l'ensemble comprend sur chaque côté du portique, une structure de fixation arrière s'étendant vers l'arrière du portique, parallèlement à la direction longitudinale, et adapté pour permettre la fixation d'au moins une partie de la pluralité de caméras formant caméras de détection arrière, orientées de sorte à acquérir des images des faces latérales et arrière du véhicule automobile lorsqu'il traverse ledit portique. Ainsi, on peut aisément acquérir des images des parties latérales et arrière de la carrosserie du véhicule automobile, avec notamment réflexion de la bande formant raie déflectométrique sur la carrosserie, avec des optiques relativement classiques, ne nécessitant pas, en particulier une focale particulièrement courte.

Selon l'invention l'ensemble comprend sur la partie supérieure du portique une structure de fixation d'un miroir, montée à l'aplomb dudit portique, et une autre structure de fixation pour fixer des caméras de la pluralité de caméras formant caméras supérieures, orientées parallèlement à l'axe longitudinale en direction du miroir, ledit miroir présentant un angle adapté pour permettre la réflexion vers lesdites caméras supérieures d'une image de la partie supérieure du véhicule automobile lorsque celui-ci traverse ledit portique. Ainsi, on peut aisément acquérir des images de la partie supérieure du véhicule automobile, comprenant le capot et le pavillon, avec un portique relativement bas, par l'effet du recul obtenue via le recourbement du faisceau optique. Ainsi, on peut employer des optiques de caméras relativement peu coûteuses tout en assurant une qualité d'acquisition relativement optimale par rapport aux champs de variabilité entre le capot et le pavillon ainsi que les différents types de véhicule. Cela permet de pouvoir employer des objectifs sans autofocus et avec une zone de netteté permettant d'encadrer la variabilité de hauteur de l'ensemble de véhicule dit particulier.

Avantageusement et de manière non limitative, l'ensemble comprend une structure de fixation avant, s'étendant vers l'avant du portique, parallèlement à la direction longitudinale, et adapté pour permettre la fixation d'au moins une partie de la pluralité de caméras formant caméras de détection avant, orientées de sorte à acquérir des images de l'avant du véhicule lorsqu'il traverse ledit portique. Ainsi, on peut obtenir aussi des images de l'avant du véhicule et des ailes latérales.

Avantageusement et de manière non limitative, l'ensemble comprend un module amovible destiné à être installé au sol, au voisinage du portique, et comprenant au moins deux caméras inférieures, orientée d'un angle de sensiblement 20° à 90°, et destiné à permettre l'acquisition d'images du sous-bassement du véhicule automobile. Ainsi, on peut obtenir aussi des images du sous-bassement du véhicule automobile de manière relativement simple.

Avantageusement et de manière non limitative, l'ensemble comprend un dispositif d'isolation lumineuse, formant arche opaque longitudinale de passage du véhicule automobile, s'étendant vers l'avant et/ou vers l'arrière du portique. Ainsi, on peut optimiser la détection des défauts, en diminuant les risques de perturbations lumineuses extérieures à l'ensemble. Ceci permettant la création d'un environnement de captation normé.

Avantageusement et de manière non limitative, la pluralité de caméras comprend des caméras hautes cadences ou moyennes cadences, permettent d'acquérir les images pour l'analyse de la réflexion de ladite bande opaque sur la carrosserie, et des caméras haute résolution pour acquérir les images adaptées à la reconnaissance des défauts sur la carrosserie.

Avantageusement et de manière non limitative, l'ensemble comprend au moins un organe de détection du véhicule automobile, conformé pour commander l'allumage de ladite source lumineuse du portique lorsqu'un véhicule automobile approche du portique. Ainsi, on peut optimiser la consommation énergétique du portique 1 ainsi que diminuer l'échauffement des composants électroniques de la source lumineuse, en sélectionnant les périodes d'éclairage en fonction de la présence ou de l'approche d'un véhicule automobile.

Avantageusement et de manière non limitative, l'organe de détection comprend un capteur de profondeur orienté selon la direction longitudinale vers l'arrière du portique de sorte à détecter l'approche d'un véhicule automobile. Ainsi, on peut détecter de manière relativement simple l'approche d'un véhicule automobile et déclencher les séquences de captation en fonction de la position du véhicule. Ainsi la captation est normée avec une prise chaque X centimètres et cela permet de traiter les aléas d'avancement (vitesse non-linéaire, arrêt du véhicule, ...)

Avantageusement et de manière non limitative, la source lumineuse est formée d'une matrice de diodes électroluminescentes recouverte d'une paroi translucide. Ainsi, on peut obtenir un éclairage puissant et uniforme avec une faible consommation énergétique et une relativement bonne fiabilité.

Avantageusement et de manière non limitative, la matrice de diode électroluminescente est faite d'une succession longitudinale de bandes de ruban LED solidarisées, par exemple collées, transversalement à la surface interne. Ainsi, on peut obtenir une matrice LED relativement puissante et de maintenance relativement simple.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue d'un ensemble de détection de défauts sur une carrosserie d'un véhicule automobile selon un mode de réalisation de l'invention ;
[Fig. 2] est une autre vue, depuis l'arrière du portique, d'un ensemble selon le mode de réalisation de la figure 1 ;
[Fig. 3] est une vue de détail d'une structure arrière droite d'un ensemble selon le mode de réalisation de la figure 1 ;
[Fig. 4] est une vue de côté de l'ensemble, à la partie arrière du portique, selon le mode de réalisation de la figure 1 ;
[Fig. 5] est une vue simplifiée de côté de l'ensemble, sans les structures déportées de caméra et de miroir, représentant notamment le module amovible pour le sous-bassement du véhicule automobile, l'organe de détection et le dispositif d'isolation lumineuse ;
[Fig. 6] est une vue schématique de côté des structures de caméra du côté droit du portique de l'ensemble selon le mode de réalisation de l'invention ;
[Fig. 7a] est une vue schématique de face, depuis la partie arrière, d'un mode de réalisation alternatif de l'invention, comprenant une bande mobile de déflectométrie ; et
[Fig. 7b] est une autre vue schématique, de côté, du mode de réalisation de l'invention selon la figure 7a.

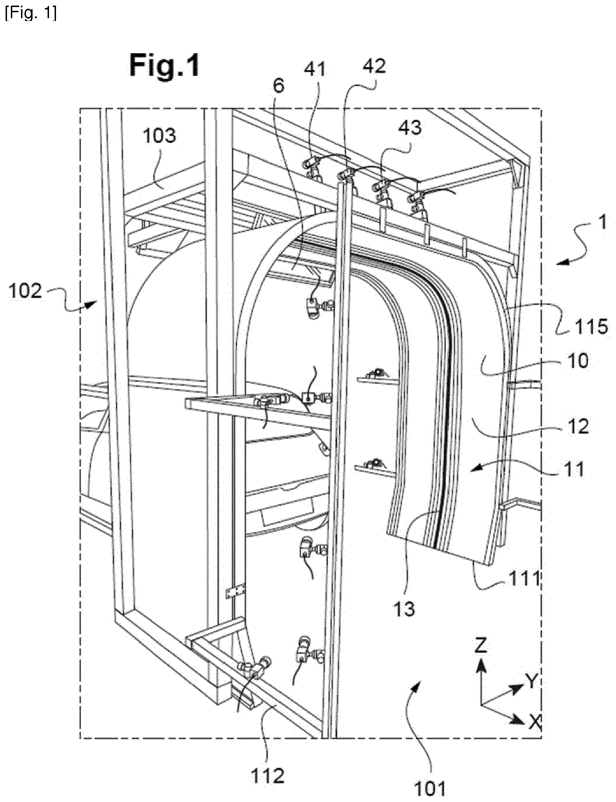

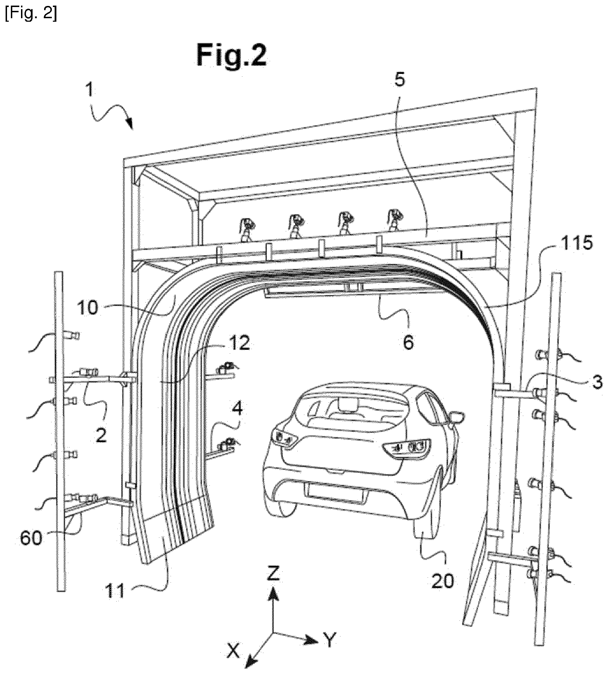

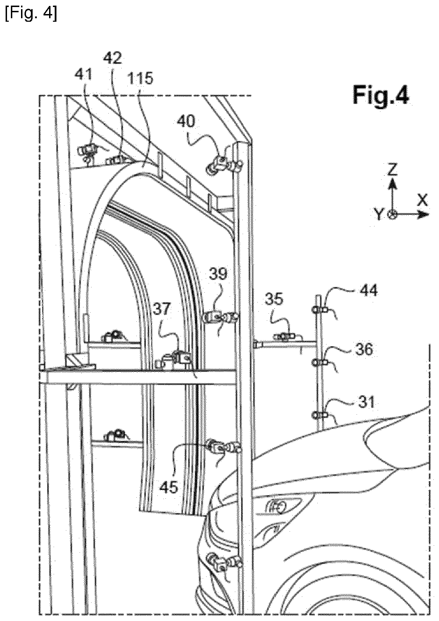

Les figures 1 à 6 se rapportant à un même mode de réalisation de l'invention seront commentées simultanément.

Un ensemble 1 de détection de défauts sur une carrosserie d'un véhicule automobile 20 comprenant un portique 10, une pluralité de caméras 30-45 et un organe de détection, non représenté.

On entend par carrosserie du véhicule automobile 20 les parties de tôles extérieures du véhicule automobile ; l'invention visant à détecter les défauts de carrosserie où de peinture, par exemple dans le cadre d'un contrôle qualité en sortie d'usine ou d'un contrôle d'état du véhicule automobile dans le cadre d'un retour de location.

Toutefois, l'invention est aussi adaptée pour détecter les défauts sur les vitres et pare-brise du véhicule automobile, ainsi que sur les rétroviseurs latéraux, tout comme les défauts sur le sous-bassement du véhicule automobile. Cependant, aux fins de concision de la description on ne se référera qu'au terme de carrosserie.

Dans cette invention, le portique 10 est installé de manière immobile au sol. Le véhicule automobile traverse le portique, soit en roulant soit, dans le cadre notamment d'une chaîne de fabrication, par translation du véhicule sur un convoyeur.

Le portique 10 forme une ossature de section droite en U inversé, conformé pour permettre le passage dudit véhicule automobile 20 selon une direction longitudinale X, depuis l'arrière 101 du portique 10 vers l'avant 102 du portique 10.

A cet effet le portique 10 présente une hauteur comprise entre 2 mètres et 5 mètres, ici 2.50 mètres de sorte à permettre le passage d'un véhicule automobile de tourisme.

Le portique 10 comprend une surface interne 11, ici en forme d'arche, s'étendant transversalement selon l'axe transversal Y, et s'étendant entre deux extrémités libres latérales 111, 112.

En d'autre terme, la surface interne 11 forme une peau intérieure du portique 10.

Les deux extrémités libres latérales 111, 112 peuvent reposer au sol, formant socle de la surface interne 11 du portique 10, ou peuvent selon une alternative de mise en oeuvre reposer sur des pieds de sorte à être maintenues à distance du sol.

La surface interne 11 comprend une source lumineuse 12 adaptée pour éclairer de manière sensiblement uniforme la carrosserie du véhicule automobile 20 lors de son passage sous le portique 10.

La forme en arche du portique 10 est avantageuse afin d'assurer un éclairage uniforme sur la carrosserie. Toutefois on peut aussi prévoir une surface interne 11 présentant des angles vifs, par exemple épousant la forme de l'ossature 103 du portique 10, ceci impliquant une maîtrise accrue des conditions d'éclairages.

La source lumineuse 12 est ici une matrice de diodes électroluminescentes, abrégé en LED, réalisée sous la forme d'une succession de bandes LED, montées contre la surface interne 11, parallèlement à l'axe transversal Y, le long de l'arche formée par la surface interne 11, sur toute la longueur de cette arche.

Les bandes LED sont espacées les unes des autres, selon l'axe longitudinal X d'un espace compris entre 30mm et 100mm par exemple de sensiblement 55mm, sur toute la profondeur longitudinale X de la surface interne 11, ici sur sensiblement 1,50 mètres.

Cette matrice de LED est ensuite recouverte par une paroi de matériau plexiglas translucide, ou tout autre matériau translucide adapté, permettant d'assurer un lissage surfacique de l'éclairage.

Ainsi, on peut obtenir un éclairage puissant et relativement uniforme permettant d'éclairer de manière fiable la carrosserie d'un véhicule automobile passant sous le portique 10.

Une bande opaque 13 est fixée sur la source lumineuse 12, ici la matrice de LED recouverte de la paroi plexiglas, par exemple par adhésif.

Cette bande opaque 13 s'étend sur la source lumineuse 12, le long de l'arche formée par la paroi interne 11, sur toute la longueur de l'arche, de sorte former une raie déflectométrique 13.

En effet, l'objectif de cette bande opaque 13 est d'en permettre le reflet sur la carrosserie du véhicule passant sous le portique 10, par contraste avec la forte illumination produite par la source lumineuse 12.

La technique de déflectométrie consiste à observer la déformation d'une raie 13 se réfléchissant sur la carrosserie d'un véhicule automobile 20, ce qui permet de détecter de manière relativement simple un enfoncement ou un défaut sur la tôle. Lors d'un enfoncement de la tôle la raie 13 réfléchie tend à s'incurver, définissant une forme caractéristique sensiblement en tourbillon, autour de la zone abîmée.

La bande opaque 13 est ici installée sensiblement au milieu de la surface interne 11, selon la direction longitudinale X.

L'invention n'est pas limitée à une seule bande opaque 13, et on peut prévoir par exemple une pluralité de bandes opaques 13 espacées longitudinalement les unes des autres.

Selon un mode préféré de l'invention, la surface interne 11 présente une pluralité de bande opaques 13 parallèles, de largeur différentes, faiblement espacées l'une de l'autre, par exemple d'un espacement inférieur ou égal à la largeur de la plus faible des bandes, de sorte à créer une signature visuelle aisément reconnaissable lors d'un analyse par déflectométrie, notamment lorsque cette analyse est mise en oeuvre par ordinateur.

Les bandes opaques peuvent être installées en plusieurs position du portique, par exemple, tel que représenté la figure 1, en un groupe au centre du portique, selon la direction arrière-avant, et en un autre groupe au voisinage de l'avant du portique.

Un autre groupe de bandes pourrait être installé, en plus ou en remplacement des groupes déjà présents, par exemple au voisinage de l'arrière du portique.

L'ensemble 1 comprend aussi une pluralité de caméras 30-45 installées de sorte à capter des images de la carrosserie du véhicule automobile 20 passant sous le portique 10.

L'invention ne se limite pas à un agencement défini des caméras au voisinage de la surface interne 11, tel que décrit ci-après, et on peut prévoir tout agencement de caméras 30-45 adapté pour capter des images de la carrosserie, et en particulier le reflet de la raie 13 sur la carrosserie du véhicule automobile 20, notamment les parties du véhicule automobile 20 à l'aplomb de la source lumineuse 12.

Dans ce mode de réalisation de l'invention, l'ensemble 1 comprend sur chaque côté du portique 10, une structure de fixation arrière 2, 3, respectivement gauche 2 et droite 3, s'étendant vers l'arrière du portique 10, parallèlement à la direction longitudinale X.

Chaque structure de fixation arrière, respectivement gauche 2 et droite 3, est adaptée pour permettre la fixation de caméras, dites caméras arrières 31-36, destinées à capter des images de la carrosserie du véhicule automobile 20 respectivement le côté gauche et le côté droit, ainsi que l'arrière du véhicule automobile sur sa partie respectivement arrière gauche et arrière droite.

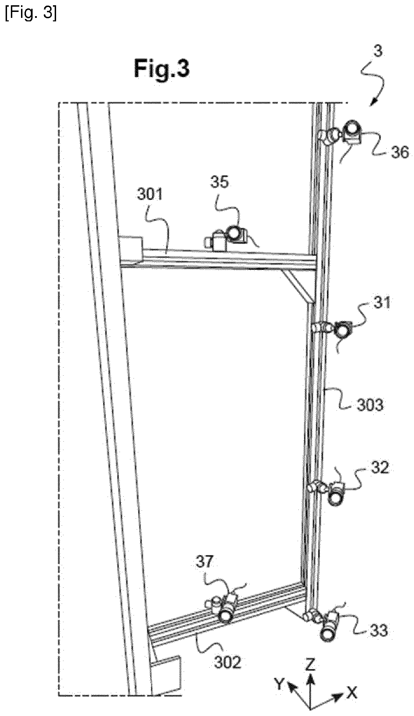

Afin d'assurer une meilleure acquisition d'images de la carrosserie du véhicule automobile, chaque structure de fixation arrière 2,3 comprend une pluralité de traverses 301, 302, ici deux traverses 301, 302 superposées à des hauteurs distinctes, ici, à titre d'exemple non limitatif, respectivement à 50cm du sol, et 1.5m du sol, et un montant 303, tel que représenté figure 3, de sorte à ce que chaque caméra puisse acquérir une image d'une portion de la carrosserie du véhicule automobile.

Le nombre de traverses, tout comme le nombre de montants, peut toutefois être augmenté en fonction du besoin de positionner des caméras à différentes distances du portique, en tenant compte des contraintes optiques des caméras employées, notamment en fonction de leur distance focale et de leur angle de champ.

Les différentes hauteurs de positionnement des caméras arrières, sur les traverses 301-302 ou sur le montant 303, ainsi que le nombre de caméras nécessaires, sont définies par les distances focales et les angles de champs des caméras employées.

L'objectif étant d'assurer que l'ensemble de la hauteur de la carrosserie soit dans le champ de vision des caméras de chaque structure arrière 2,3 respective, avec une netteté suffisante pour permettre notamment une détection algorithmique des défauts de carrosserie.

Les caméras arrière sont ici éloignées, selon la direction longitudinale X, de la bordure proximale 115 de la surface interne 11 d'une distance comprise entre 50cm et 1m.

Chaque caméra de chaque structure arrière 2,3 est orientée de sorte à acquérir des images de l'arrière du véhicule lorsqu'il traverse ledit portique.

Les caméras sont orientées et éloignées de la bordure proximale 115 de la surface interne 11 en fonction de leur focale et de leur angle de champ de sorte à capter une partie de la carrosserie d'un véhicule automobile20, de manière relativement nette.

Chaque structure arrière 2, 3 comprend en particulier deux caméras haute résolution monochromes, ici d'une résolution, à titre d'exemple, de 4024x3036 pixels, et quatre caméras hautes cadences, ici d'une résolution, à titre d'exemple, de 1920x1200 pixels de moindre résolution, ceci permettant d'obtenir des résultats optimaux pour les différents types de détection mis en oeuvre, par déflectométrie et par analyse directe des images de la carrosserie.

A titre d'exemple avantageux, et tel que représenté sur les figures, on installe sur l'ensemble 1, toutes structures confondues :
- 12 caméras haute-cadence dont 4 pour examen latéral droit du véhicule, 4 pour examen latéral gauche du véhicule automobile et 4 pour examen du capot et du toit du véhicule automobile ;
- 8 caméras haute-résolution dont 2 pour l'examen arrière gauche du véhicule, 2 pour l'examen arrière droit, 2 pour l'examen avant droit et deux pour l'examen avant gauche du véhicule automobile.

On compte en outre 2 caméras hautes-cadences pour le module amovible 52 d'analyse du soubassement du véhicule automobile.

Aussi la structure arrière comprend pour chaque côté, droite ou gauche, en référence à la figure 3, un montant comprenant quatre caméras haute-cadence 31-33, 36, et deux traverses 301, 302, comprenant chacune une caméra haute-résolution 35, 37.

Autrement dit, on peut installe 20 caméras sur le portique ce qui permet d'obtenir une analyse fiable et robuste.

Les caméras hautes cadences, ou selon une alternative des caméras moyennes cadences, permettent d'effectuer l'acquisition d'image pour l'analyse par déflectométrie, pour détecter les « POC », autrement dit les petits enfoncements de la tôle, tel que des impacts de cailloux ou de gravier.

Les caméras haute résolution, ou selon une alternative des caméras de moyenne résolution, permettent quant à elle de faire du traitement d'image direct pour détecter notamment les rayures, défauts de peinture.

Les caméras haute-cadence et haute-résolution installées sont dans ce mode de réalisation des caméras monochromes, de sorte à réduire l'encombrement de stockage numérique des images, mais peuvent aussi être des caméras couleur.

La qualité et la fréquence d'acquisition des caméras peut être sélectionnée en fonction de la granularité voulue pour la détection des défauts de carrosserie.

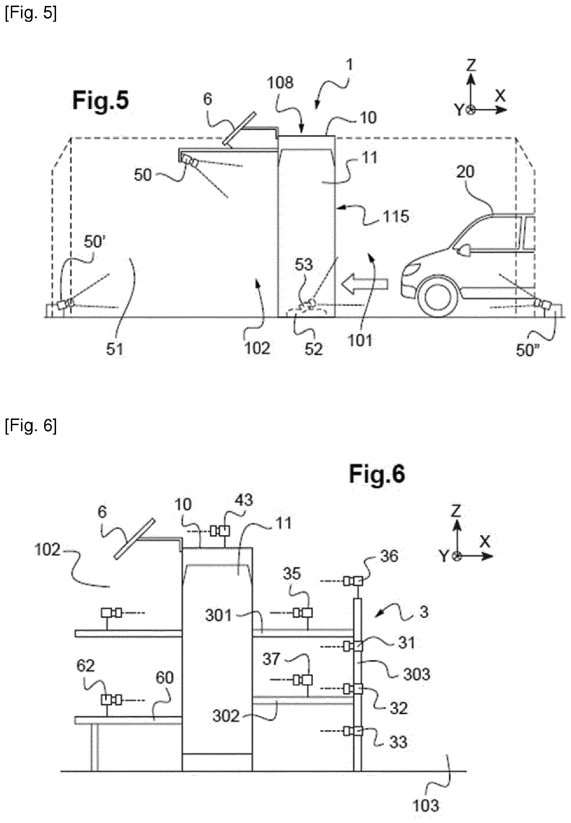

L'ensemble 1 comprend aussi, de manière similaire aux structures arrière 2, 3, des structures avant 60, telle que celle représentée pour le côté droit 60 en figure 6. Toutefois l'invention comprend deux structures avant 60, l'une pour le côté droit 60 et une autre pour le côté gauche, non représenté.

Cette structure avant 60 comprend deux traverses 60 sur lesquelles sont fixées pour chacune une caméra 61, 62, destinée à visualiser une partie latérale avant du véhicule automobile, le frontal du véhicule automobile ainsi que l'aile avant. A cet effet, les structures avant 60 n'ont pas la nécessité de présenter une hauteur importante dans le cadre des véhicules de tourismes, pour lesquels l'avant du véhicule est généralement relativement bas.

Toutefois dans le cas d'un portique 10 destiné à détecter des défauts sur des véhicules de grande hauteur, tels que des remorques de camion, la structure avant 60 pourra être surélevée, tel que décrit pour les structures arrières 2, 3 afin d'acquérir des images pour toute la face frontale du véhicule automobile.

L'ensemble 1 comprend aussi sur la partie supérieure 108 du portique 10 une structure de fixation d'un miroir 6, s'étendant vers l'avant 102 du portique, et une autre structure de fixation, à l'aplomb du portique, pour fixer des caméras supérieures 41-43, orientées sensiblement parallèlement à l'axe longitudinale X en direction du miroir 6.

Dans ce mode de réalisation on installe quatre caméras supérieures, ici des caméras monochromes, par exemple haute cadence.

Le miroir 6 s'étend sur une longueur transversale Y sensiblement égale à la longueur transversale de la paroi interne 11.

Dans ce mode de réalisation le miroir 6 est installé sensiblement à 50 cm vers l'avant, selon la direction longitudinale X, du portique 10 et présente un angle de sensiblement 40° par rapport à l'axe vertical Z.

Le miroir 6 est orienté de sorte qu'il définit un angle permettant de réfléchir vers les caméras supérieures 41-43 l'image de la partie supérieure du véhicule automobile 20 lorsque celui-ci passe sous le portique 10.

Ainsi, on peut obtenir un recul suffisant des caméras pour acquérir des images du pavillon d'un véhicule automobile, avec un portique relativement bas.

Ceci permet notamment d'employer des caméras relativement peu coûteuses avec une focale relativement lointaine.

L'ensemble 1 comprend aussi un module amovible 52, non représenté, destiné à reposer au sol, dans ce mode de réalisation au sol sous le portique 10, et comprenant au moins une caméra 53.

Selon des alternatives de mises en oeuvre, le module amovible 52 peut toutefois être installé en une autre position au sol, par exemple à l'avant ou à l'arrière du portique 10.

La caméra 53 du module amovible 52 est orientée d'un angle de sensiblement 20° à 90° par rapport au sol, et permet l'acquisition d'images du sous-bassement du véhicule automobile 20 lors de son passage sous le portique 10.

On privilégie en particulier une caméra couleur pour le module amovible, car l'analyse de la couleur du soubassement permet de détecter des problèmes tel que des fuites de liquide.

Selon un mode particulier de l'invention, l'ensemble comprend aussi un dispositif d'isolation lumineuse 51, en forme d'arche opaque longitudinale, s'étendant vers l'arrière 101 et/ou vers l'avant 102 du portique.

En d'autres termes le dispositif d'isolation lumineuse 51 forme un tunnel dans lequel pénètre le véhicule automobile, créant une zone obscure, permettant de mieux contrôler l'éclairage sous le portique.

Dans ce mode de réalisation, le portique 10 comprend deux bâches opaques 51, montés en tunnel vers l'arrière 101 et vers l'avant 102 du portique 10, sur une longueur comprise entre 1m et 5m de long, par exemple 3m de long, de chaque côté.

L'ensemble 1 comprend aussi, en référence à la figure 5, un organe de détection 50 du véhicule automobile, commandant l'allumage de ladite source lumineuse 11 du portique 10 lorsqu'un véhicule automobile approche du portique.

Ainsi on peut assurer un allumage sélectif de la source lumineuse permettant notamment de réduire la consommation énergétique et de limiter l'échauffement des composants électroniques, en particulier des LED employées.

Ici l'organe de détection est un capteur 3D de profondeur, qui détecte l'approche d'un véhicule automobile et commande l'allumage du portique et le déclenchement des caméras.

Le capteur 3D peut être installé en hauteur 50, au sol à l'avant 50' ou à sol à l'arrière 50" du portique de sorte à détecter l'approche d'un véhicule automobile ; le positionnement du capteur 3D étant libre, en fonction des contraintes structurelles de chaque installation.

Chaque caméra peut être commandée pour l'acquisition d'image, en fonction de l'avancement du véhicule détecté par le capteur 3D. Ainsi, on peut réguler le nombre d'images acquises en fonction de la vitesse de progression du véhicule automobile.

L'ensemble comprend enfin un organe de détection, ici un ordinateur comprenant des moyens d'acquisition et de stockage des images des caméras, ainsi que des moyens de calcul.

L'organe de détection reçoit alors les images captées par la pluralité de caméras et met en oeuvre un procédé de détection par analyse de la réflexion de ladite bande opaque 12 sur la carrosserie, dite technique de déflectométrie, et un procédé de détection par reconnaissance directe dans lesdites images de défaut sur la carrosserie.

On entend par reconnaissance directe, un procédé d'analyse d'image, ou un procédé d'apprentissage automatique, adapté à reconnaître automatiquement, et sans analyse déflectométrique, des défauts sur l'image d'une carrosserie.

Il arrive que des problèmes de détection de déflectométrie se produisent sur la face arrière du véhicule automobile, notamment lorsque cette face présente une paroi verticale. En effet la réflexion de la raie sur cette façade ne peut être correctement projetée lors du passage du véhicule automobile 20 sous le portique 10, certaines zones de la façade verticale arrière du véhicule automobile ne reflétant pas la raie.

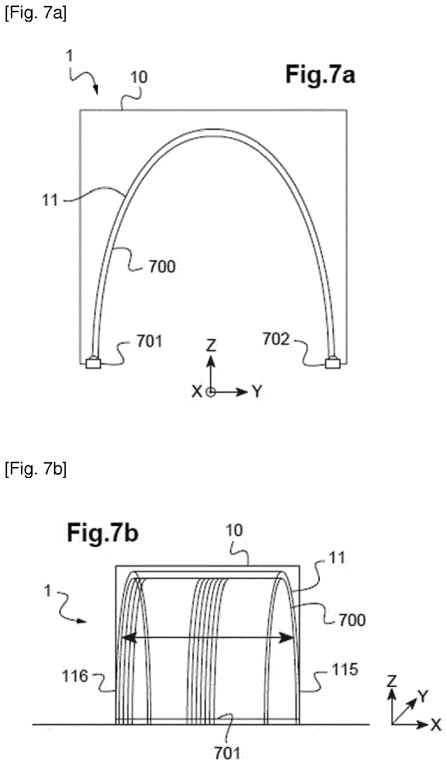

A cet effet, en référence aux figures 7a et 7b, on installe une bande mobile 700 en forme d'arche, épousant sensiblement la courbure de la surface interne 11, est montée sur deux rails longitudinaux 701, 702 s'étendant de part et d'autre de la surface interne 11 du portique 10.

La bande mobile 700 est alors conformée pour pouvoir se translater le long des deux rails longitudinaux entre les deux bordures transversales 115, 116 du portique.

La bande mobile 700 est commandée en translation selon la direction longitudinale X, de sorte à déplacer la position de la bande mobile 700, en fonction de la position du véhicule automobile 20 sous le portique 10 et en fonction de la vitesse de progression du véhicule automobile 20.

## Revendications

1. Ensemble (1) de détection de défauts sur une carrosserie d'un véhicule automobile (20), son soubassement et ses pneumatiques, comprenant un portique (10), de section droite en U inversé, conformé pour permettre le passage dudit véhicule automobile (20), selon une direction longitudinale (X), depuis l'arrière (101) du portique (10) vers l'avant (102) du portique (10) ; ledit portique (10) comprenant une surface interne (11) s'étendant transversalement (Y) entre deux extrémités libres latérales (111, 112) et comprenant une source lumineuse (12) adaptée pour éclairer de manière sensiblement uniforme la carrosserie du véhicule automobile (20) lors de son passage, ledit portique (11) comprenant au moins une bande opaque (12) s'étendant transversalement (Y) sur toute la longueur de la surface interne (11) ; ledit ensemble (1) comprenant une pluralité de caméras (30-45) installées à distance du portique (10), selon au moins un direction longitudinale (X), de sorte à pouvoir capter des images de la carrosserie du véhicule automobile (20) lors de son passage sous le portique (10), et un organe de détection apte à recevoir lesdites images captées par ladite pluralité de caméras (30-45) et à détecter, en fonction desdites images, des défauts de la carrosserie, d'une part par analyse de la réflexion de ladite bande opaque (12) sur la carrosserie, et d'autre part par reconnaissance directe dans lesdites images de défaut mise en valeur par l'observation du reflet de la source lumineuse (12) sur la carrosserie ;
ledit ensemble comprenant sur chaque côté du portique (10), une structure de fixation arrière (2, 3) s'étendant vers l'arrière (101) du portique (10), parallèlement à la direction longitudinale (X), et adapté pour permettre la fixation d'au moins une partie de la pluralité de caméras (31-38) formant caméras de détection arrière, orientées de sorte à acquérir des images des faces latérales et arrière du véhicule automobile (2) lorsqu'il traverse ledit portique (10) ; **caractérisé en ce que**
ledit ensemble comprend sur la partie supérieure (108) du portique (10) une structure de fixation d'un miroir (6), s'étendant vers l'avant (102) du portique (10), et une autre structure de fixation pour fixer des caméras (41-43) de la pluralité de caméras formant caméras supérieures (41-43), orientées sensiblement parallèlement à l'axe longitudinale (X) en direction du miroir (6), ledit miroir (6) présentant un angle adapté pour permettre la réflexion vers lesdites caméras supérieures d'une image de la partie supérieure du véhicule automobile (20) lorsque celui-ci traverse ledit portique (10).

2. Ensemble de détection (1) selon la revendication 1, **caractérisé en ce que** la surface interne (11) présente une forme arquée selon la direction transversale (Y).

3. Ensemble de détection (1) selon la revendication 1 ou 2 **caractérisé en ce qu'**il comprend une structure de fixation avant (60), montée à l'aplomb (102) du portique (10), et adapté pour permettre la fixation d'au moins une partie de la pluralité de caméras formant caméras de détection avant, orientées de sorte à acquérir des images de l'avant du véhicule automobile (20) lorsqu'il traverse ledit portique (10).

4. Ensemble de détection (1) selon l'une quelconque des revendications 1 à 3, **caractérisé en ce qu'**il comprend un module amovible (52) destiné à être installé au sol, sous le portique (10), et comprenant au moins une caméra inférieure (53), orientée d'un angle de sensiblement 20° à 90°, et destiné à permettre l'acquisition d'images du sous-bassement du véhicule automobile (20).

5. Ensemble de détection (1) selon l'une quelconque des revendications 1 à 4, **caractérisé en ce qu'**il comprend un dispositif d'isolation lumineuse (51), formant arche opaque longitudinale de passage du véhicule automobile (20), s'étendant vers l'arrière (101) et/ou vers l'avant (102) du portique (10).

6. Ensemble de détection (1) selon l'une quelconque des revendications 1 à 5, la pluralité de caméras comprend au moins une caméra hautes cadence ou moyenne cadence, permettent d'acquérir les images pour l'analyse de la réflexion de ladite bande opaque (13) sur la carrosserie, et au moins une caméra haute résolution pour acquérir les images adaptées à la reconnaissance directe des défauts sur la carrosserie.

7. Ensemble de détection (1) selon l'une quelconque des revendications 1 à 6, **caractérisé en ce qu'**il comprend au moins un organe de détection (50) du véhicule automobile (20), conformé pour commander l'allumage de ladite source lumineuse (12) de la surface interne (11) du portique (10) lorsqu'un véhicule automobile (20) approche du portique (10).

8. Ensemble de détection (1) selon la revendication 7, **caractérisé en ce que** l'organe de détection (50) comprend un capteur de profondeur (50) orienté selon la direction longitudinale (X) vers l'arrière (101) du portique (10) de sorte à détecter l'approche d'un véhicule automobile.

9. Ensemble de détection (1) selon l'une quelconque des revendications 1 à 8, **caractérisé en ce que** la source lumineuse (12) est formée d'une matrice de diodes électroluminescentes recouverte d'une paroi translucide.

10. Ensemble de détection (1) selon la revendication 9, **caractérisé en ce que** la matrice de diode électroluminescente est faite d'une succession longitudinale de bandes de ruban LED solidarisées, par exemple collées, transversalement à la surface interne (11).

## Patentansprüche

1. Einheit (1) zur Erfassung von Fehlern an einer Karosserie eines Kraftfahrzeug (20), seines Unterbaus und seiner Reifen, einen Portalrahmen (10) mit einem umgekehrten U-förmigen Querschnitt umfassend, der ausgelegt ist, um die Durchfahrt des Kraftfahrzeugs (20) in Längsrichtung (x) von der Rückseite (101) des Portalrahmens (10) zur Vorderseite (102) des Portalrahmens (10) zu ermöglichen; wobei der Portalrahmen (10) eine innere Oberfläche (11) umfasst, die sich quer (y) zwischen zwei seitlichen freien Enden (111, 112) erstreckt und eine Lichtquelle (12) umfasst, die angepasst ist, um die Karosserie des Kraftfahrzeugs (20) während der Durchfahrt im Wesentlichen gleichmäßig zu beleuchten, wobei der Portalrahmen (11) mindestens einen opaken Streifen (12) umfasst, der sich quer (y) über die gesamte Länge der inneren Oberfläche (11) erstreckt; wobei die Einheit (1) eine Vielzahl von Kameras (30-45) umfasst, die in einem Abstand vom Portalrahmen (10) in mindestens einer Längsrichtung (x) so installiert sind, dass sie Bilder der Karosserie des Kraftfahrzeugs (20) aufnehmen können, während seiner Durchfahrt unter dem Portalrahmen (10), und ein Erfassungsorgan, das geeignet ist, die Bilder, die von der Vielzahl von Kameras (30-45) aufgenommen werden, zu empfangen, und anhand der Bilder Karosseriefehler zu erfassen, zum einen durch Analyse der Reflexion des opaken Streifens (12) auf der Karosserie, und zum anderen durch direkte Erkennung in den Fehlerbildern, die durch Beobachtung der Widerspiegelung der Lichtquelle (12) auf der Karosserie hervorgerufen werden;
wobei die Einheit auf jeder Seite des Portalrahmens (10) eine Struktur der hinteren Befestigung (2, 3) umfasst, die sich zur Rückseite (101) des Portalrahmens (10) parallel zur Längsrichtung (x) erstreckt, und angepasst ist, um mindestens die Befestigung eines Teils der Vielzahl von Kameras (31-38) zu ermöglichen, die Kameras der hinteren Erfassung bilden, die ausgerichtet sind, um Bilder der seitlichen und hinteren Flächen des Kraftfahrzeugs (2) zu erlangen, wenn es den Portalrahmen (10) durchquert; **dadurch gekennzeichnet, dass**
die Einheit am oberen Teil (108) des Portalrahmens (10) eine Struktur der Spiegelbefestigung (6) umfasst, die sich zur Vorderseite (102) des Portalrahmens (10) erstreckt, und eine weitere Befestigungsstruktur zur Befestigung von Kameras (41-43) der Vielzahl von Kameras, die die oberen Kameras (41-43) bilden, die im Wesentlichen parallel zur Längsachse (x) in Richtung des Spiegels (6) ausgerichtet sind, wobei der Spiegel (6) einen Winkel aufweist, der angepasst ist, um die Reflexion eines Bildes des oberen Teils des Kraftfahrzeugs (20) zu den oberen Kameras zu ermöglichen, wenn dieses den Portalrahmen (10) durchquert.

2. Erfassungseinheit (1) nach Anspruch 1, **dadurch gekennzeichnet, dass** die innere Oberfläche (11) eine entlang der Querrichtung (y) gewölbte Form aufweist.

3. Erfassungseinheit (1) nach Anspruch 1 oder 2, **dadurch gekennzeichnet, dass** sie eine vordere Befestigungsstruktur (60) umfasst, die im Lot (102) des Portalrahmen (10) montiert ist, und angepasst, um die Befestigung von mindestens einem Teil der Vielzahl von Kameras zu ermöglichen, die die Kameras der vorderen Erfassung bilden, die ausgerichtet sind, um Bilder der Vorderseite des Kraftfahrzeugs (20) zu erlangen, wenn es den Portalrahmen (10) durchquert.

4. Erfassungseinheit (1) nach einem der Ansprüche 1 bis 3, **dadurch gekennzeichnet, dass** sie ein abnehmbares Modul (52) umfasst, das bestimmt ist, um am Boden unter dem Portalrahmen (10) installiert zu werden, und mindestens eine untere Kamera (53) umfasst, die in einem Winkel von im Wesentlichen 20° bis 90° ausgerichtet ist, und bestimmt ist, um die Erlangung von Bildern des Unterbaus des Kraftfahrzeugs (20) zu ermöglichen.

5. Erfassungseinheit (1) nach einem der Ansprüche 1 bis 4, **dadurch gekennzeichnet, dass** sie eine Vorrichtung zur Lichtisolierung (51) umfasst, die einen länglichen, opaken Bogen der Durchfahrt des Kraftfahrzeugs (20) bildet, und sich zur Rückseite (101) und/oder zur Vorderseite (102) des Portalrahmens (10) erstreckt.

6. Erfassungseinheit (1) nach einem der Ansprüche 1 bis 5, wobei die Vielzahl von Kameras mindestens eine Kamera mit hoher Frequenz oder mittlerer Frequenz umfasst, die ermöglicht, die Bilder zur Analyse der Reflexion des opaken Streifens (13) auf der Karosserie zu erlangen, und mindestens eine hochauflösende Kamera, um die Bilder zu erlangen, die zur direkten Erkennung von Fehlern an der Karosserie angepasst sind.

7. Erfassungseinheit (1) nach einem der Ansprüche 1 bis 6, **dadurch gekennzeichnet, dass** sie mindestens ein Erfassungsorgan (50) des Kraftfahrzeugs (20) umfasst, das dazu ausgelegt ist, das Einschalten der Lichtquelle (12) der inneren Oberfläche (11) des Portalrahmens (10) zu steuern, wenn sich ein Kraftfahrzeug (20) dem Portalrahmen (10) nähert.

8. Erfassungseinheit (1) nach Anspruch 7, **dadurch gekennzeichnet, dass** das Erfassungsorgan (50) einen Tiefensensor (50) umfasst, der entlang der Längsrichtung (x) zur Rückseite (101) des Portalrahmens (10) ausgerichtet ist, um die Annäherung eines Kraftfahrzeugs zu erfassen.

9. Erfassungseinheit (1) nach einem der Ansprüche 1 bis 8, **dadurch gekennzeichnet, dass** die Lichtquelle (12) aus einer Leuchtdiodenmatrix gebildet ist, die von einer lichtdurchlässigen Wandung bedeckt ist.

10. Erfassungseinheit (1) nach Anspruch 9, **dadurch gekennzeichnet, dass** die Leuchtdiodenmatrix aus einer längslaufenden Abfolge von fest verbundenen LED-Bandstreifen besteht, zum Beispiel quer zur inneren Oberfläche (11) geklebt.

## Claims

1. An assembly (1) for detecting defects on a bodywork of a motor vehicle (20), its understructure and its tires, comprising a portal (10), of inverted U-shaped cross section, shaped to allow the passage of said motor vehicle (20) in a longitudinal direction (X), from the rear (101) of the portal (10) to the front (102) of the portal (10); said portal (10) comprising an inner surface (11) extending transversely (Y) between two lateral free ends (111, 112) and comprising a light source (12) suitable for illuminating, in a substantially uniform manner, the bodywork of the motor vehicle (20) during its passage, said portal (11) comprising at least one opaque strip (12) extending transversely (Y) over the entire length of the inner surface (11); said assembly (1) comprising a plurality of cameras (30-45) installed at a distance from the portal (10), in at least one longitudinal direction (X), so as to capture images of the bodywork of the motor vehicle (20) during its passage under the portal (10), and a detection member suitable for receiving said images captured by said plurality of cameras (30-45) and for detecting, according to these images, defects in the bodywork, on the one hand by analyzing the reflection of the opaque strip (12) on the bodywork and, on the other hand, by directly recognizing, in said images, defects highlighted by observing the reflection of the light source (12) on the bodywork;
said assembly comprising, on each side of the portal (10), a rear attachment structure (2, 3) extending to the rear (101) of the portal (10), parallel to the longitudinal direction (X), and suitable for allowing the attachment of at least some of the plurality of cameras (31-38) forming rear detection cameras, which are oriented so as to acquire images of the side and rear faces of the motor vehicle (2) as it passes through said portal (10) ;
said assembly comprising on the upper portion (108) of the portal (10), one attachment structure for a mirror (6), extending to the front (102) of the portal (10), and another attachment structure for attaching cameras (41-43) of the plurality of cameras forming upper cameras (41-43), which are oriented substantially parallel to the longitudinal axis (X) in the direction of the mirror (6), said mirror (6) having an angle suitable for allowing the reflection, toward said upper cameras, of an image of the upper portion of the motor vehicle (20) as the latter passes through said portal (10).

2. The detection assembly (1) as claimed in claim 1, **characterized in that** the inner surface (11) has an arcuate shape in the transverse direction (Y).

3. The detection assembly (1) as claimed in any one of claims 1 to 2, **characterized in that** it comprises a front attachment structure (60), mounted in line (102) with the portal (10), and suitable for allowing the attachment of at least some of the plurality of cameras forming front detection cameras, which are oriented so as to acquire images of the front of the motor vehicle (20) as it passes through said portal (10).

4. The detection assembly (1) as claimed in any one of claims 1 to 3, **characterized in that** it comprises a removable module (52) intended to be installed on the ground, under the portal (10), and comprising at least one lower camera (53), oriented at an angle of substantially 20° to 90°, and intended to allow the acquisition of images of the understructure of the motor vehicle (20).

5. The detection assembly (1) as claimed in any one of claims 1 to 4, **characterized in that** it comprises a light isolation device (51), forming a longitudinal opaque arch for the passage of the motor vehicle (20), extending to the rear (101) and/or to the front (102) of the portal (10).

6. The detection assembly (1) as claimed in any one of claims 1 to 5, the plurality of cameras comprising at least one high-speed or medium-speed camera, making it possible to acquire the images for analyzing the reflection of said opaque strip (13) on the bodywork, and at least one high-resolution camera for acquiring the images that are suitable for directly recognizing defects on the bodywork.

7. The detection assembly (1) as claimed in any one of claims 1 to 6, **characterized in that** it comprises at least one detection member (50) for the motor vehicle (20), designed to control the activation of said light source (12) of the inner surface (11) of the portal (10) as a motor vehicle (20) approaches the portal (10).

8. The detection assembly (1) as claimed in claim 7, **characterized in that** the detection member (50) comprises a depth sensor (50), oriented in the longitudinal direction (X) to the rear (101) of the portal (10) so as to detect the approach of a motor vehicle.

9. The detection assembly (1) as claimed in any one of claims 1 to 8, **characterized in that** the light source (12) is formed of a matrix array of light-emitting diodes covered with a translucent wall.

10. The detection assembly (1) as claimed in claim 9, **characterized in that** the matrix array of light-emitting diodes is made of a longitudinal succession of strips of LED tape which are secured, for example glued, transversely to the inner surface (11).
